# EUROPÄISCHE PATENTSCHRIFT

(11) **EP 2 817 795 B1**
(45) Veröffentlichungstag und Bekanntmachung des Hinweises auf die Patenterteilung: **08.08.2018**
(21) Anmeldenummer: 13715593.3
(22) Anmeldetag: 08.02.2013
(51) Int. Cl.: G09F 3/00, G09F 7/16

(54) **WERKSTÜCK MIT MARKIERUNG**
WORKPIECE WITH MARKING
PIÈCE À USINER AVEC MARQUAGE

(30) Priorität: 24.02.2012 DE 102012003519
(43) Veröffentlichungstag der Anmeldung: 31.12.2014
(73) Patentinhaber: Polysecure GmbH, 79108 Freiburg (DE)
(72) Erfinder: BAQUE, Thomas, 79109 Freiburg (DE); MOESSLEIN, Jochen, 79100 Freiburg (DE)
(74) Vertreter: Scholz, Volker
(86) Internationale Anmeldenummer: PCT/DE2013/000075
(87) Internationale Veröffentlichungsnummer: WO 2013/123925

(56) Entgegenhaltungen:
- EP-A1- 1 843 144
- WO-A1-00/68870
- DE-A1-102008 060 675
- FR-A1- 2 927 839
- US-A1- 2011 017 026

## Beschreibung

Die vorliegende Erfindung betrifft ein Werkstück mit einer Markierung, ein Verfahren zu dessen Herstellung sowie ein Verfahren zur Authentifizierung und/oder Identifizierung des Werkstücks.

Es ist bekannt, dass technische und andere hochwertige Produkte häufig unerlaubt kopiert werden, dabei entsteht den einzelnen Unternehmen sowie darüber hinaus der gesamten Wirtschaft ein hoher Schaden. Zudem sind die kopierten Produkte oft von minderer Qualität. Da dem Kunden die Fälschung nicht bewusst ist, projektiert er eventuelle Mängel auf die minderwertige Qualität der Marke, es entsteht mithin auch ein enormer Imageschaden bei den Herstellern.

Aufgrund der technischen Möglichkeiten können viele Serienprodukte, wie zum Beispiel Maschinenteile, heutzutage mindestens makroskopisch praktisch perfekt kopiert werden. Daher ist es häufig schwierig, wenn nicht sogar unmöglich, Originalprodukte und Plagiate voneinander zu unterscheiden, so dass Originalprodukte zur Unterscheidung gezielt, wirksam und wirtschaftlich mit zusätzlichen Merkmalen gekennzeichnet werden müssen.

Diese Markierung von Werkstücken ist jedoch nicht nur für die Unterscheidung zwischen Original und Plagiat von Bedeutung, eine Markierung von Werkstücken gewinnt auch zunehmend an Relevanz bei der Sortierung von (zerkleinerten oder zerteilten) Werkstücken beim Recycling.

Auf dem Fachgebiet sind unterschiedlichste Verfahren zur Markierung von Materialien und Werkstücken sowie zum Schutz vor bzw. zum Erkennen von Fälschungen beschrieben.

Nach dem Stand der Technik können zum Kennzeichnen von Werkstücken vor allem Etiketten an der Oberfläche des Werkstücks angebracht werden. Zur eigentlichen Kennzeichnung müssen solche Etiketten dann offene oder verdeckte Sicherheitsmerkmale besitzen, die eindeutig und reproduzierbar nachgewiesen bzw. gemessen werden können. Sicherheitsmerkmale können ein bestimmtes Muster, zum Beispiel Bar Codes, Hologramme, Mikrografiken, eine bestimmte Farbe, eine elektronische Information, zum Beispiel bei RFID-Chips, und vieles mehr sein.

Auf der Oberfläche aufgebrachte Markierungen, wie Etiketten oder Bedruckungen, haben jedoch den Nachteil, dass sie gegen mechanische und chemische Angriffe der Oberfläche relativ empfindlich sind und durch entsprechende Beanspruchung abgelöst oder beschädigt werden können. Ferner sind Etiketten aufgrund ihrer Zugänglichkeit oft kopierbar, so dass kein wirksamer Schutz vor Plagiaten besteht.

In das Werkstück bzw. den Werkstoff eingebettete Markierungen zeigen deutliche Vorteile, sind jedoch nicht immer anwendbar. Insbesondere bei Metallen, Gläsern und Kermiken, wo hohe Schmelztemperaturen die Markierungsmittel zerstören können, oder bei Werkstücken, die aus kommerziell erhältlichen Halbzeugen, zum Beispiel Metallprofilen, hergestellt werden, können solche Markierungssysteme nicht eingesetzt werden. Das Dokument WO00/68870A (D1) ist als nächstliegender Stand der Technik angesehen. Es ist eine Aufgabe der vorliegenden Erfindung, ein Werkstück mit einem Markierungssystem bereitzustellen, das die Nachteile aus dem Stand der Technik überwindet. Insbesondere soll das Markierungssystem in dem Werkstück, das vorzugsweise aus Metall, Keramik, Holz Kunststoff und/oder Glas aufgebaut ist, auf kleinstem Raum eingesetzt werden können und vorzugsweise den Gesamteindruck des Werkstücks nicht signifikant beeinträchtigen. Weiterhin soll trotz Markierung das Werkstück beim Recyceln so aufgearbeitet werden können, dass der Markierungsstoff vor bzw. während des Recycelns zerstört werden kann, um eine Verteilung des Markierungsstoffs über die Recyclingströme auf daraus hergestellte Neuprodukte zu vermeiden.

Darüberhinaus ist es eine Aufgabe der vorliegenden Erfindung, ein Verfahren zur Herstellung eines erfindungsgemäßen Werkstücks bereitzustellen, sowie ein Verfahren zur Authentifizierung und/oder Identifizierung eines solchen Werkstücks.

Die erste Aufgabe wird gelöst durch ein Werkstück das auf seiner Oberfläche eine Vertiefung mit einer Öffnungsbreite von mindestens 0,2 mm aufweist, in welcher Vertiefung ein im wesentlichen untrennbar mit dem Werkstück verbundener Trägerstoff angeordnet ist, der einen für das Werkstück charakteristischen Markierungsstoff enthält.

Das erfindungsgemäße Werkstück zeichnet sich in überraschender Weise insbesondere dadurch aus, dass ein einen Markierungsstoff enthaltender Trägerstoff im wesentlichen untrennbar mit dem Werkstück verbunden ist, indem der den Markierungsstoff enthaltende Trägerstoff in einer auf der Oberfläche des Werkstücks eingearbeiteten Vertiefung aufgenommen ist. Diese Vertiefung weist eine Öffnungsbreite von mindestens 0,2 mm auf, wobei jedoch die Form der Vertiefung beliebig ist. Die Vertiefung kann beispielsweise als kreisrunde Bohrung ausgeführt sein. Ebenfalls denkbar ist eine Prägung, wie beispielsweise in Form eines Firmenlogos. Die Vertiefung kann senkrechte oder leicht geneigte Seitenwände aufweisen, wie beispielsweise in Form eines Hinterschnitts mit Schwalbenschwanzform. Entsprechende Maßnahmen zur Einbringung der Vertiefung auf der Oberfläche des Werkstücks sind auf dem Fachgebiet hinreichend bekannt.

Erfindungsgemäß soll unter einer im wesentlichen untrennbaren Verbindung zwischen Werkstück und Trägerstoff eine Verbindung verstanden werden, deren Lösung nicht ohne Zerstörung des Werkstücks und/oder des Trägerstoffs erfolgen kann. Eine Öffnungsbreite von mindestens 0,2 mm der auf dem Werkstück angeordneten Vertiefung ist erforderlich, damit in einem Verfahren zur Authentifizierung und/oder Identifizierung des Werkstücks eine einfache Analyse des Markierungsstoffs mit Hilfe von elektromagnetischer Strahlung erfolgen kann und im Grund genommen eine ausreichende Fläche vorliegt, auf die elektromagnetische Strahlung einfallen kann und/oder von der elektromagnetische Strahlung, beispielsweise Fluoreszenz, abgegeben werden kann.

Das erfindungsgemäße Werkstück überwindet die mit der Markierung durch Etiketten verbundenen Nachteile, insbesondere der leichten Ablösbarkeit oder Beschädigung, da im erfindungsgemäßen Werkstück der den Markierungsstoff enthaltende Trägerstoff im wesentlichen untrennbar mit dem Werkstück verbunden ist und sich in einer mehr oder weniger geschützten Weise, beispielsweise in einer Vertiefung mit Hinterschnitt, am Werkstück befindet.

Im Vergleich zur Markierung eines Werkstücks, bei der entsprechender Markierungsstoff im Material des Werkstücks selbst bei dessen Herstellung eingemischt wird, weist das erfindungsgemäße Werkstück den weiteren Vorteil auf, dass beim Recyceln des Werkstücks der den Markierungsstoff enthaltende Trägerstoff dann ohne größere Probleme zerstört werden kann, um eine Verteilung des Markierungsstoff über die Recyclingströme auf daraus hergestellte neue Produkte zu vermeiden. Um diesen Zweck zu erreichen, können je nach Material des Werkstücks geeignete Materialien für den Trägerstoff und den Markierungsstoff ausgewählt werden, die sich in einer besonderen Eigenschaft vom Material des Werkstücks unterscheiden. Werden beispielsweise aus Aluminium gefertigte erfindungsgemäße Werkstücke einem Recyclingverfahren unterworfen, so ist für die Aufbereitung des Aluminiums eine Temperatur von etwa 1000°C erforderlich. Für eine Markierung eines solchen Werkstücks kann dann ein Trägerstoff und Markierungsstoff ausgewählt werden, die, beispielsweise, bereits bei einer Temperatur von bis zu 800°C zerstört werden, so dass sie in dem Recyclingstrom nicht involviert werden. Beispielhafte Trägerstoffe sind dann natürlich z.B. die unten erwähnten polymeren Verbindungen, die Temperaturen von 800°C nicht standhalten können. Auch die Auswahl von Markierungsstoffen kann geeigneterweise angepasst werden, so dass auch der Markierungsstoff bei Temperaturen von unter 1000°C zersetzt/zerstört wird.

Es ist bevorzugt, dass das Werkstück aus Metall, Glas, Holz, Kunststoff und/oder Keramik ist.

Auch ist bevorzugt vorgesehen, dass die Vertiefung eine Tiefe von 0,1-5 mm, bevorzugt 0,5-1 mm aufweist, und/oder die Vertiefung eine Öffnungsbreite von 1-4 mm aufweist.

Eine bevorzugte Ausführungsform zeichnet sich dadurch aus, dass der Trägerstoff in flüssiger oder pastöser Form in die Vertiefung einbringbar und dann in der Vertiefung aushärtbar ist. Der in die Vertiefung eingebrachte Trägerstoff kann daher die Form eines Tropfens annehmen.

Dabei ist bevorzugt, dass der Trägerstoff ausgewählt ist aus der Gruppe bestehend aus Glas und polymeren Verbindungen wie Epoxid-, Polyester-, Polyether-, Silikon- und/oder Phenolharz.

Ebenfalls erfindungsgemäß besonders bevorzugt ist, dass der Markierungsstoff ausgewählt ist aus der Gruppe bestehend aus Stokes- und/oder Anti-Stokes-Pigmenten, keramischen Markern, vorzugsweise mit einem chemischen Code, oder einem Material, das eine vom Trägerstoff und/oder dem Werkstoff unterscheidbare Eigenschaft aufweist.

Auch kann vorgesehen sein, dass auf die Oberfläche der Vertiefung ein Vorbehandlungsmittel zur Verbesserung der Haftung aufgetragen ist.

Die zweite Aufgabe wird gelöst durch ein Verfahren zur Herstellung eines Werkstücks nach einem der vorangehenden Ansprüche, dadurch gekennzeichnet, dass es die Schritte umfasst:
a) Einbringen einer Vertiefung mit einer Breite von mindestens 0,2 mm in die Oberfläche eines Werkstücks;
b) Einbringen eines Trägerstoffs, der einen für das Werkstück charakteristischen Markierungsstoff enthält, in flüssiger oder pastöser Form in die Vertiefung;
c) Aushärten und im wesentlichen untrennbares Verbinden des Trägerstoffs mit dem Werkstück.

Wesentlich für die Herstellung des erfindungsgemäßen Werkstücks ist die im wesentlichen untrennbare Verbindung zwischen dem den Markierungsstoff enthaltenden Trägerstoff und dem Werkstück. Als Trägerstoff wird besonders bevorzugt eine aushärtbare polymere Verbindung eingesetzt, in den der Markierungsstoff zunächst eingebracht, vorzugsweise gelöst, werden kann. Der den Markierungsstoff enthaltende Trägerstoff wird dann in die im Werkstück vorbereitete Vertiefung eingebracht, was sowohl manuell als auch automatisch erfolgen kann. Der eingebrachte Trägerstoff kann dann in der Vertiefung aushärten.

Als Markierungsstoff kommen insbesondere Verbindungen in Frage, die Stokes oder Anti-Stokes-Strahlungsverhalten zeigen, keramische Marker, vorzugsweise mit einem chemischen Code, wie sie beispielsweise aus der WO2010/066237 bekannt sind, oder kann ein anderer beliebiger Stoff sein, der eine charakteristische Eigenschaft aufweist, die den Markierungsstoff vom umgebenden Trägerstoff und/oder dem Werkstück unterscheidet.

Der Trägerstoff kann neben dem Markierungsstoff selbstverständlich weitere geeignete Stoffe enthalten, wie beispielsweise Farbmittel oder Füllstoffe.

Die Einbringung des flüssigen oder pastösen Trägerstoffs kann so erfolgen, dass der Trägerstoff nach der Aushärtung flächenbündig, vertieft oder erhaben in Bezug auf das Werkstück vorliegt. Nach dem Aushärten kann die Oberfläche des Werkstücks einschließlich des Trägerstoffs gegebenenfalls mit gängigen Verfahren, wie Schleifen, Polieren, etc., weiter bearbeitet werden.

Schließlich ist erfindungsgemäß ein Verfahren zur Authentifizierung und/oder Identifizierung eines Werkstücks vorgesehen, welches die Schritte umfasst:
i) qualitatives und/oder quantitatives Auslesen des Markierungsstoffs; und
ii) Abgleich des in Schritt i) erhaltenen Ausleseergebnisses mit für das Werkstück hinterlegten Authentifizierungs- und/oder Identifizierungsinformationen.

Ein mit einem Markierungsstoff versehenes erfindungsgemäßes Werkstück kann auf einfache Art und Weise in dem oben beschriebenen Verfahren eingesetzt werden, indem der Markierungsstoff bzw. das Markierungsmittel mit geeigneten Detektoren ausgelesen wird.

Werden als Markierungsstoffe Stokes- oder Anti-Stokes-Verbindungen eingesetzt, genügt nach entsprechender Einstrahlung von elektromagnetischer Strahlung geeigneter Wellenlänge eine einfache Kamera zur Überprüfung, ob entsprechende Fluoreszenzeffekte detektiert werden können.

Bei Verwendung eines auf dem Fachgebiet bekannten keramischen Markers mit chemischem Code, der auf Basis einer qualitativen und quantitativen Verteilung von Metallen eingestellt wird, kann eine Detektion über Röntgenfluoreszenzanalyse erfolgen.

Die in der vorstehenden Beschreibung, sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

## Patentansprüche

1. Werkstück, das auf seiner Oberfläche eine Vertiefung mit einer Öffnungsbreite von mindestens 0,2 mm aufweist, in welcher Vertiefung ein im wesentlichen untrennbar mit dem Werkstück verbundener Trägerstoff angeordnet ist, der einen Markierungsstoff enthält, **dadurch gekennzeichnet, dass** der Trägerstoff in flüssiger oder pastöser Form in die Vertiefung einbringbar und dann in der Vertiefung aushärtbar ist.

2. Werkstück nach Anspruch 1, **dadurch gekennzeichnet, dass** es aus Metall, Glas, Holz, Kunststoff und/oder Keramik ist.

3. Werkstück nach Anspruch 1 oder 2, **dadurch gekennzeichnet, dass** die Vertiefung eine Tiefe von 0,1-5 mm, bevorzugt 0,5-1 mm aufweist, und/oder die Vertiefung eine Öffnungsbreite von 1-4 mm aufweist.

4. Werkstück nach einem der vorangehenden Ansprüche, **dadurch gekennzeichnet, dass** der Trägerstoff ausgewählt ist aus der Gruppe bestehend aus Glas und polymeren Verbindungen wie Epoxid-, Polyester-, Polyether-, Silikon- und/oder Phenolharz.

5. Werkstück nach einem der vorangehenden Ansprüche, **dadurch gekennzeichnet, dass** der Markierungsstoff ausgewählt ist aus der Gruppe bestehend aus Stokes- und/oder Anti-Stokes-Pigmenten, keramischen Markern, vorzugsweise mit einem chemischen Code, oder einem Material, das eine vom Trägerstoff und/oder dem Werkstoff unterscheidbare Eigenschaft aufweist.

6. Werkstück nach einem der vorangehenden Ansprüche, **dadurch gekennzeichnet, dass** auf die Oberfläche der Vertiefung ein Vorbehandlungsmittel zur Verbesserung der Haftung aufgetragen ist.

7. Verfahren zur Herstellung eines Werkstücks nach einem der vorangehenden Ansprüche, **dadurch gekennzeichnet, dass** es die Schritte umfasst:
a) Einbringen einer Vertiefung mit einer Öffnungsbreite von mindestens 0,2 mm in die Oberfläche eines Werkstücks;
b) Einbringen eines Trägerstoffs, der einen für das Werkstück charakteristischen Markierungsstoff enthält, in flüssiger oder pastöser Form in die Vertiefung;
c) Aushärten und im wesentlichen untrennbares Verbinden des Trägerstoffs mit dem Werkstück.

8. Gebrauch eines Werkstücks nach einem der Ansprüche 1 bis 6, zur Authentifizierung und oder Identifizierung welcher die Schritte umfasst:
i) qualitatives und/oder quantitatives Auslesen des Markierungsstoffs; und
ii) Abgleich des in Schritt i) erhaltenen Ausleseergebnisses mit für das Werkstück hinterlegten Authentifizierungs- und/oder Identifizierungsinformationen.

## Claims

1. Workpiece, which on its surface has a depression having an opening width of at least 0.2 mm, in which depression a carrier material which is connected in a substantially inseparable manner to the workpiece and which contains a marking material, is disposed, **characterized in that** the carrier material is introducible into the depression in liquid or pasty form and is then curable in the depression.

2. Workpiece according to claim 1, **characterized in that** the workpiece is made from metal, glass, wood, plastic and/or ceramic.

3. Workpiece according to claims 1 or 2, **characterized in that** the depression preferably has a depth of 0.1-5 mm, preferably 0.5-1 mm, and/or the depression has an opening width of 1-4 mm.

4. Workpiece according to any one of the above claims, **characterized in that** the carrier material is selected from the group consisting of glass and polymer compounds such as epoxy resin, polyester resin, polyether resin, silicone resin and/or phenolic resin.

5. Workpiece according to any one of the above claims, **characterized in that** the marking material is selected from the group consisting of Stokes and/or Anti-Stokes pigments, ceramic markers, preferably with a chemical code, or a material having a characteristic which can be differentiated from the carrier material and/or the material.

6. Workpiece according to any one of the above claims, **characterized in that** on the surface of the depression a pretreatment agent for improving adhesion is applied.

7. Method for manufacturing a workpiece according to any one of the above claims, **characterized in that** said method comprises the steps of:
a) introducing a depression having an opening width of at least 0.2 mm into the surface of a workpiece;
b) introducing a carrier material, which contains a marking material characteristic of the workpiece, in liquid or pasty form into the depression;
c) curing and connecting the carrier material in a substantially inseparable manner to the workpiece.

8. Use of a workpiece according to any one of claims 1 to 6
for authentication and/or identification comprising the steps of:
i) qualitative and/or quantitative reading of the marking material; and
ii) matching the reading result obtained in step i) with stored items of authentication and/or identification information for the workpiece.

## Revendications

1. Pièce à usiner présentant sur sa surface un évidement d'une largeur d'ouverture d'au moins 0,2 mm et dans lequel est disposé un matériau support qui est lié de manière essentiellement inséparable à la pièce à usiner et qui contient un matériau de marquage, **caractérisée en ce que** le matériau support peut être introduit sous forme liquide ou pâteuse dans l'évidement puis être durci dans l'évidement.

2. Pièce à usiner selon la revendication 1, **caractérisée en ce qu'**elle est constituée de métal, de verre, de bois, de matière plastique et/ou de céramique.

3. Pièce à usiner selon la revendication 1 ou 2, **caractérisée en ce que** l'évidement présente une profondeur comprise entre 0,1 et 5 mm, de préférence entre 0,5 et 1 mm, et/ou l'évidement présente une largeur d'ouverture comprise entre 1 et 4 mm.

4. Pièce à usiner selon l'une des revendications précédentes, **caractérisée en ce que** le matériau support est choisi dans un groupe comprenant le verre et les composés polymères tels que la résine époxy, la résine polyester, la résine polyéther, la résine de silicone et/ou la résine phénolique.

5. Pièce à usiner selon l'une des revendications précédentes, **caractérisée en ce que** le matériau de marquage est choisi dans un groupe comprenant les pigments de Stokes et/ou Anti-Stokes, les marqueurs céramiques, comportant de préférence un code chimique ou une substance qui affiche une propriété différenciable du matériau support et/ou du matériau.

6. Pièce à usiner selon l'une des revendications précédentes, **caractérisée en ce qu'**un agent de prétraitement destiné à améliorer l'adhérence est appliqué sur la surface de l'évidement.

7. Procédé de fabrication d'une pièce à usiner selon l'une des revendications précédentes, **caractérisé en ce qu'**il comprend les étapes consistant à :
a) réaliser un évidement d'une largeur d'ouverture d'au moins 0,2 mm dans la surface d'une pièce à usiner ;
b) introduire dans l'évidement un matériau support sous forme liquide ou pâteuse, comportant un matériau de marquage caractéristique de la pièce à usiner ;
c) durcir le matériau support et le lier de manière essentiellement inséparable avec la pièce à usiner.

8. Utilisation d'une pièce à usiner selon l'une des revendications 1 à 6 pour l'authentification et/ou l'identification qui comprend les étapes suivantes :
i. analyse qualitative et/ou quantitative du matériau de marquage ; et
ii. comparaison du résultat d'analyse obtenu à l'étape i) avec les informations d'authentification et/ou d'identification enregistrées pour la pièce à usiner.
